# EUROPEAN PATENT APPLICATION

(11) **EP 1 367 510 A2**
(43) Date of publication of application: **03.12.2003**
(21) Application number: 03253315.0
(22) Date of filing: 27.05.2003
(51) Int. Cl.: G06F 17/30

(54) **Reservation system**

(30) Priority: 30.05.2002 JP 2002156628
(71) Applicant: Pioneer Corporation, Meguro-ku, Tokyo (JP)
(72) Inventor: Tanaka, Yoshitaka, c/o Pioneer Corporation, Tokorozawa-shi, Saitama (JP); Yamamura, Gaku, c/o Pioneer Corporation, Tokorozawa-shi, Saitama (JP); Morioka, Ryuichiro, c/o Pioneer Corporation, Tokorozawa-shi, Saitama (JP); Minoshima, Kunihiro, c/o Pioneer Corporation, Tokorozawa-shi, Saitama (JP); Watanabe, Kazutomo, c/o Pioneer Corporation, Tokorozawa-shi, Saitama (JP); Hasebe, Tsuyoshi, c/o Pioneer Corporation, Tokorozawa-shi, Saitama (JP); Higuchi, Masao, c/o Pioneer Corporation, Tokorozawa-shi, Saitama (JP); Inagaki, Kasutoshi, c/o Pioneer Corporation, Tokorozawa-shi, Saitama (JP); Shirosaki, Yasuo, c/o Pioneer Corporation, Tokorozawa-shi, Saitama (JP)
(74) Representative: Haley, Stephen

(57) **Abstract**

A WEB page browse reservation managing system by which a user can make a reservation for a time for browsing a WEB (World Wide Web) page. The system includes a registration unit, a timer unit and a notification information transmission unit. The registration unit registers a URL of a WEB page reserved for a browse by a user and a browse time in a browse reservation list. The timer unit detects the browse time or a time just earlier by a predetermined time than the browse time. The notification information transmission unit transmits notification information about arrival of the browse time at a point of time when an interrupt occurs from the timer unit.

## Description

The present disclosure relates to the subject matter contained in Japanese Patent Application No. 2002-156628 filed May 30, 2002, which is incorporated herein by reference in its entirety.

The present invention relates to a system, method and program for managing WEB page browse reservation. Particularly, it relates to a WEB page browse reservation managing system, a WEB page browse reservation managing method and a WEB page browse reservation managing program by which a user can make a reservation for a time for browsing a WEB (World Wide Web) page, and from which the user can receive notification information about arrival of the time for browsing the WEB page when the reserved time has arrived.

When a user browsing WEB pages wants to browse a specific WEB page at a specific time (date and time), the user heretofore memorizes the specific WEB page and the specific time, and watches arrival of the specific time by himself or herself. In such a manner, when the user is aware that the specific time has arrived, the user must open the memorized specific WEB page and browse the specific WEB page by himself or herself.

Incidentally, the WEB page-browsing user's memorizing a browse time for a specific WEB page, watching the browse time by himself or herself, and opening and browsing the specific WEB page by himself or herself at the time of being aware of arrival of the browse time as described above largely depends on the user's power of memory. Accordingly, a large burden is imposed on the user. In addition, there is a problem that this method cannot be executed surely if the user has a poor memory.

When, for example, a user wants to book a ticket on the Internet through a user terminal on the assumption that booking of the ticket will start at a specific time, the operation of opening and browsing a WEB page at the specific time as described above is a necessary operation. The user himself or herself, however, may forget to browse the WEB page at the specific time of the booking start if the user is engrossed in another work. In such a case, the user may consequently miss the chance to book the ticket.

The invention is developed in consideration of the problems described in the related art. An object of the invention is to provide a WEB page browse reservation managing system, a WEB page browse reservation managing method and a WEB page browse reservation managing program by which a user who has made a reservation for a browse time of a WEB page can be notified of the arrival of the browse time while the WEB page can be opened automatically, at the browse time or at a time just earlier by a predetermined time than the browse time.

In order to solve the problems, according to the invention, there is provided a WEB page browse reservation managing system including: a registration unit for registering a URL of a WEB page reserved for a browse by a user and a browse time in a browse reservation list; a timer unit for detecting the browse time or a time just earlier by a predetermined time than the browse time; and a notification information transmission unit for transmitting notification information about arrival of the browse time of the WEB page reserved for the browse at a point of time when an interrupt occurs from the timer unit.

Thus, when the user has made a reservation for a browse time of a WEB page, notification information for notifying the user of the arrival of the browse time for the WEB page is transmitted to the user at the browse time or at a time just earlier by a predetermined time than the browse time. Accordingly, the user can browse the reserved WEB page surely.

Further, according to the invention, there is provided a WEB page browse reservation managing system further including a notification display unit for displaying the notification information about arrival of the time reserved for the browse by the user on a WEB browse portion or a WEB display terminal.

Thus, the user can be surely notified of the arrival of the browse time for the WEB page when the user views the WEB browse portion or the WEB display terminal.

Further, according to the invention, there is provided a WEB page browse reservation managing system, wherein the WEB page reserved for the browse is displayed on the WEB browse portion or the WEB display terminal. w

Thus, the reserved WEB page can be opened automatically when the browse time of the reserved the WEB page has arrived.

Further, according to the invention, there is provided a WEB page browse reservation managing system, including a portable phone, wherein the notification information about arrival of the time reserved for the browse by the user is sent to a portable terminal.

Thus, the user can be surely notified of the arrival of the browse time for the reserved WEB page even in the case where the user has moved to a place spatially far from the WEB browse portion or the WEB display terminal.

Further, according to the invention, there is provided a WEB page browse reservation managing system, wherein the WEB page reserved for the browse is displayed on the portable terminal.

In such a manner, if the portable terminal is provided with a display portion for displaying the WEB page, the reserved WEB page can be displayed on the display portion of the portable terminal when the browse time of the WEB page has arrived.

Further, according to the invention, there is provided a WEB page browse reservation managing system, wherein the portable terminal carried by the user is any one of a portable phone, a PDA, a WEB browser function-including terminal, and a mailer-including terminal.

Thus, the notification information can be delivered to the user when the user carries any one of a portable phone, a PDA, a WEB browser function-including terminal, and a mailer-including terminal with him or her. Accordingly, the user can surely browse the reserved WEB page on the basis of the notification information sent to the portable terminal.

Further, a WEB page browse reservation managing method and a WEB page browse reservation managing program for controlling a WEB page browse reservation managing system defined above are realized.

The present invention may be more readily described with reference to the accompanying drawings:
Fig. 1 is a block diagram for explaining a WEB page browse reservation managing system according to a first embodiment of the invention.
Fig. 2 is an example of a pop-up display screen for notifying that it is just the reserved browse time.
Fig. 3 is an example of a display screen for displaying the WEB page reserved for a browse.
Fig. 4 is a flow chart showing an operation of the WEB page browse reservation managing system according to the first embodiment of the invention.
Fig. 5 is a block diagram for explaining a WEB page browse reservation managing system according to a second embodiment of the invention.
Fig. 6 is a flow chart showing an operation of the WEB page browse reservation managing system according to the second embodiment of the invention.

Embodiments of a system and method for managing WEB page browse reservation according to the invention will be described below in detail with reference to the drawings in the order of a first embodiment and a second embodiment.

Although the respective embodiments give detailed description to a system and method for managing WEB page browse reservation according to the invention, description concerning a WEB page browse reservation managing program will be also included in the following description because the WEB page browse reservation managing program is a program realized in the form of respective constituent elements included in the WEB page browse reservation managing system.

### [First Embodiment]

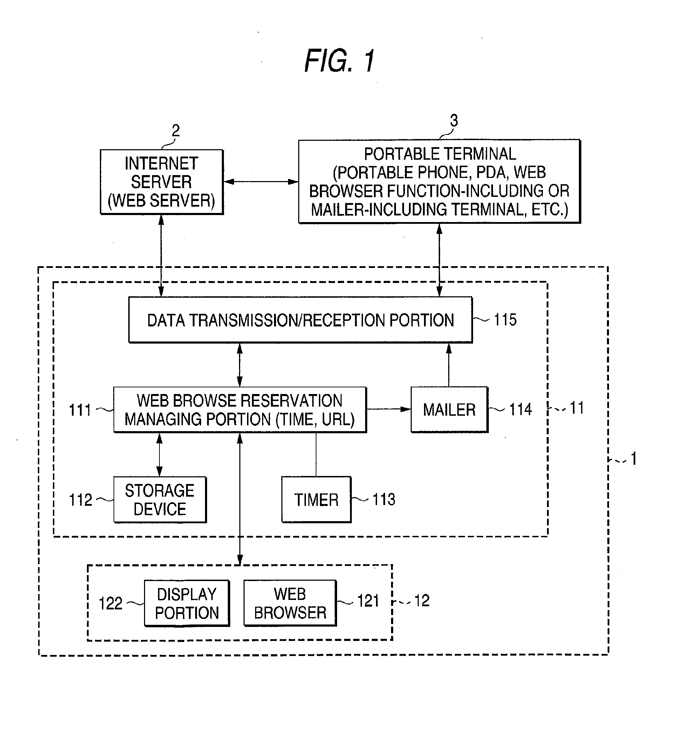

Fig. 1 is a block diagram for explaining a WEB page browse reservation managing system according to a first embodiment of the invention.

As shown in Fig. 1, the WEB page browse reservation managing system 1 is connected to an Internet server 2 connected to the Internet, an LAN, or the like, and to a portable terminal 3 for receiving notification information (electronic mail or the like) by means of wireless communication or the like.

The WEB page browse reservation managing system 1 includes a reservation managing portion 11 for performing the processes of making a reservation for a browse of a WEB page and executing the reservation, and a WEB browse portion 12 for displaying the reserved WEB page on a display screen.

Although the WEB page browse reservation managing system 1 also includes a data input portion for inputting data by the user, the data input portion is not shown.

The reservation managing portion 11 includes a WEB browse reservation managing portion 111 for performing the processes of making a reservation for a specific WEB page expressed by a URL and a browse time and executing the reservation, a storage device 112 for storing data such as the URL (Uniform Resource Locator) of the reserved specific WEB page and the reserved browse time, a timer 113 for detecting arrival of the specified browse time, a mailer 114 for processing a piece of electronic mail sent to the portable terminal 3, and a data transmission/reception portion 115 for transmitting/receiving data to/from the Internet server 2 and the portable terminal 3.

The WEB browse portion 12 includes a WEB browser 121 having a WEB browser function for browsing the reserved WEB page, and a display portion 122 for displaying the reserved WEB page on a display screen.

For example, the Internet server 2 is an ordinary server or a special content server connected to the Internet, an LAN (Local Area Network), or the like. For example, the portable terminal 3 is a portable phone, a PDA (Personal Digital Assistant), or a WEB browser function-including or mailer-including terminal.

Assume now that the data transmission/reception portion 115 of the reservation managing portion 11 and the Internet server 2 are connected to each other through the Internet, an LAN, or the like. Assume further that the data. transmission/reception portion 115 of the reservation managing portion 11 and the portable terminal 3 are connected to each other directly or through the Internet server 2 by means of wireless communication.

Respective constituent elements of the WEB page browse reservation managing system according to the embodiment will be described below.

First, respective constituent elements of the reservation managing portion 11 will be described.

The WEB browse reservation managing portion 111 of the reservation managing portion 11 receives a data input concerning a URL of a browse WEB page and a browse time from a user through the data input portion (not shown) and checks the browse WEB page. Then, the WEB browse reservation managing portion 111 registers the URL of the browse WEB page and the browse time in a browse reservation list in the storage device 112 (registration unit).

Further, the WEB browse reservation managing portion 111 sets the browse time or a time just earlier by a predetermined time than the browse time in the timer 113 (timer unit) . After this point of time, at a point of time when an interrupt occurs from the timer 113, the WEB browse reservation managing portion 111 starts the mailer 114 to request transmission of a piece of electronic mail for notification of the arrival of the browse time for the browse WEB page and send the piece of electronic mail from the mailer 114 to the portable terminal 3 through the data transmission/reception portion 115 if a communication path to the portable terminal 3 has been already established.

If the communication path to the portable terminal 3 has not been established yet or if the communication path to the portable terminal 3 has been already established and the electronic mail sending request is completed, the WEB browse reservation managing portion 111 starts download and display of the browse WEB page registered in accordance with the reservation.

As a preparation for the download and display, first, the WEB browse reservation managing portion 111 confirms whether the WEB browser 121 of the WEB browse portion 12 is currently operative or inoperative. When the WEB browser 121 is currently operative, the WEB browse reservation managing portion 111 makes the display portion 122 of the WEB browse portion 12 pop up a message for notification of the arrival of the time reserved for the browse by the user on a pop-up display screen (notification display unit).

Then, the WEB browse reservation managing portion 111 checks the browse reservation list in the storage device 112, deduces the URL of the browse WEB page reserved for the browse and registered in association with the browse time from coincidence of the browse time with a point of time when an interrupt occurs from the timer 113, delivers the URL to the WEB browse portion 12, and makes the display portion 122 display the WEB page expressed by the URL.

Then, upon reception of a message for notification of the completion of the user's browsing the browse WEB page from the WEB browser 121 of the WEB browse portion 12, the WEB browse reservation managing portion 111 deletes the piece of reservation data registered in the browse reservation list.

When the browse WEB page is to be downloaded and displayed in the condition that the WEB browser 121 of the WEB browse portion 12 is currently inoperative, however, the WEB browse reservation managing portion 111 starts the WEB browser 121 to make the display portion 122 of the WEB browse portion 12 pop up a message for notifying that the browse time reserved by the user has passed. Then, the WEB browse reservation managing portion 111 performs a series of processes the same as the aforementioned processes which start from deduction of the URL and end up with download and display of the browse WEB page by means of the WEB browser 121 of the WEB browse portion 12.

The storage device 112 of the reservation managing portion 11 has the browse reservation list (not shown), and registers the URL of the browse WEB page and the browse time which are delivered from the WEB browse reservation managing portion 111, in the browse reservation list. The whole of the browse reservation list registered thus can be referred to by the WEB browse reservation managing portion 111.

The timer 113 of the reservation managing portion 11 receives setting of the browse time or the time just earlier by a predetermined time than the browse time from the WEB browse reservation managing portion 111 and watches the progress of time since the point of time when the setting is made. When the fact that the current time coincides with the set browse time is detected, the timer 113 informs the WEB browse reservation managing portion 111 of this fact.

The mailer 114 of the reservation managing portion 11 creates a piece of electronic mail containing a text indicating the arrival of the reserved browse time and the reserved browse time on the basis of an instruction from the WEB browse reservation managing portion 111, and transmits the piece of electronic mail to the portable terminal 3 through the data transmission/reception portion 115.

The data transmission/reception portion 115 of the reservation managing portion 11 downloads the browse WEB page from the Internet server 2 on the basis of an instruction from the WEB browser 121 via the WEB browse reservation managing portion 111, and delivers the downloaded browse WEB page to the WEB browser 121 via the WEB browse reservation managing portion 111.

Next, respective constituent elements of the WEB browse portion 12 in the WEB page browse reservation managing system 1 will be described.

The WEB browser 121 of the WEB browse portion 12 downloads the browse WEB page expressed by the URL from the Internet server 2 via the data transmission/reception portion 115 and the WEB browse reservation managing portion 111 of the reservation managing portion 11 in accordance with an instruction from the WEB browse reservation managing portion 111 of the reservation managing portion 11, creates a display screen for displaying the browse WEB page on the basis of the downloaded information, and makes the display portion 122 display the browse WEB page on the display screen.

While the pop-up display screens are popped up, the display portion 122 of the WEB browse portion 12 displays the browse WEB page created after the download on the display screen by the control of the WEB browser 121.

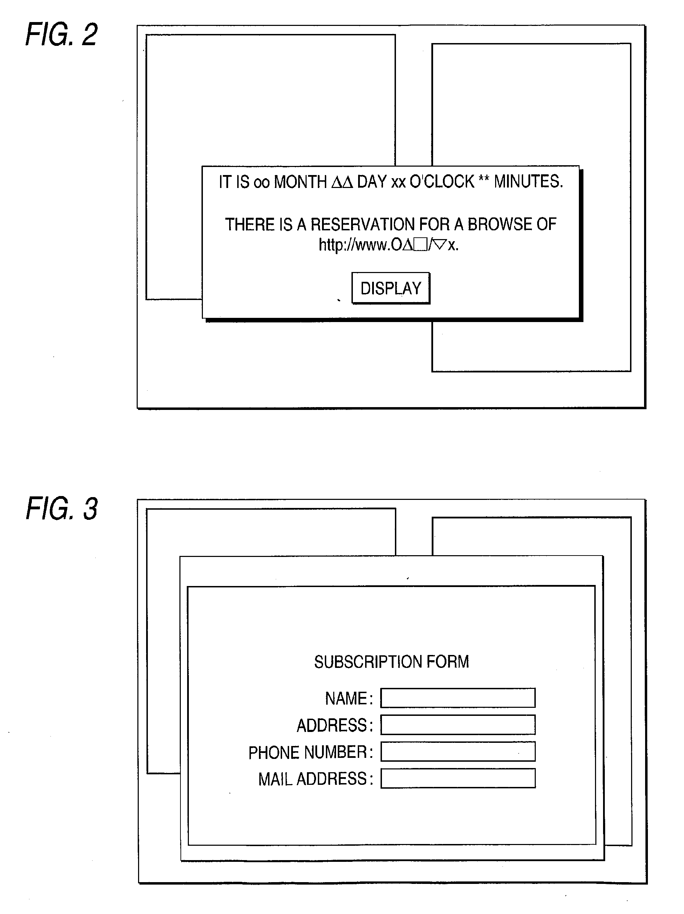

Fig. 2 shows an example of the pop-up display screen for notifying that it is just the reserved browse time. In order to prevent the user from missing the pop-up display screen when the user is doing another work, the pop-up display screen may be preferably displayed in the topmost one of a plurality of windows overlapping one another.

Fig. 3 is an example of the display screen for displaying the WEB page reserved for the browse. Like Fig. 2, the WEB page display screen may be preferably displayed in the topmost one of a plurality of windows overlapping one another so that the user can browse the reserved WEB page soon when the user is doing another work.

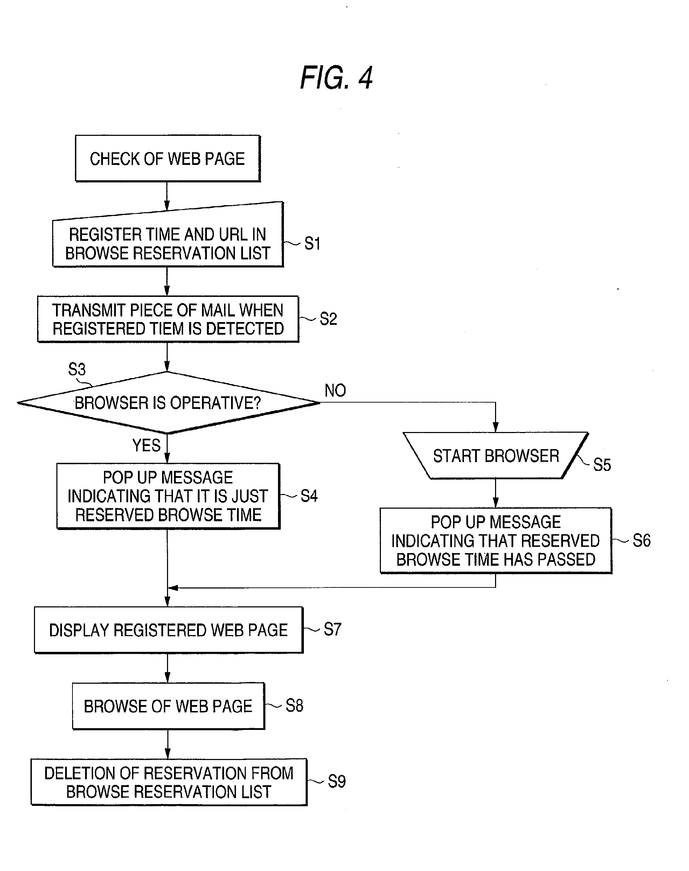

Fig. 4 is a flow chart showing an operation of the WEB browse reservation managing portion 111 of the reservation managing portion 11. The operation of the WEB browse reservation managing portion 111 of the reservation managing portion 11 will be described below according to the flow chart shown in Fig. 4 in connection with reference to Fig. 1.

First, in Step S1, after the WEB browse reservation managing portion 111 receives data input concerning a URL of a browse WEB page and a browse time from a user through the data input portion and checks the browse WEB page, the WEB browse reservation managing portion 111 registers the URL of the browse WEB page and the browse time in the browse reservation list in the storage device 112 . Further, the WEB browse reservation managing portion 111 sets the browse time or the time just earlier by a predetermined time than the browse time in the timer 113.

Next, in Step S2, the WEB browse reservation managing portion 111 starts the mailer 114 at a point of time when the registered time has arrived, that is, when an interrupt occurs from the timer 113, to request transmission of a piece of electronic mail for notification of the arrival of the browse time for the browse WEB page and transmit the piece of electronic mail from the mailer 114 to the portable terminal 3 through the data transmission/reception portion 115. When WEB display needs to be made on the portable terminal 3 as will be described later, the URL information of the browse WEB page reserved for the browse will be transmitted together with the piece of electronic mail.

Next, in Step S3, the WEB browse reservation managing portion 111 verifies whether the WEB browser 121 of the WEB browse portion 12 is currently operative or inoperative. When the WEB browser 121 is currently operative, the routine of processing advances to Step S4. On the other hand, when the WEB browser 121 is currently inoperative, the routine of processing shifts to Step S5.

In Step S4, a message for notification of the arrival of the time reserved for the browse by the user is popped up on a pop-up display screen by the display portion 122 of the WEB browse portion 12.

Next, in Step S7, the WEB browse reservation managing portion 111 checks the browse reservation list in the storage device 112, deduces the URL of the browse WEB page reserved for the browse and registered in association with the browse time from coincidence of the browse time with the point of time when an interrupt occurs from the timer 113, delivers the URL to the WEB browse portion 12, makes the WEB browser 121 of the WEB browse portion 12 download the browse WEB page expressed by the URL from the Internet server 2 through the data transmission/reception portion 115 and the WEB browse reservation managing portion 111 to display the downloaded browse WEB page on a display screen, and makes the display portion 122 display the downloaded browse WEB page on the display screen.

Incidentally, when the portable terminal 3 is a WEB browser function-including terminal, the browse WEB page expressed by the URL may be downloaded from the Internet server 2 to the portable terminal 3 by means of wireless communication and displayed on the portable terminal 3.

When the user finishes browsing the WEB page (Step S8) , the WEB browse reservation managing portion 111 receives a message for notification of the completion of the user's browsing the browse WEB page from the WEB browser 121 of the WEB browse portion 12. On reception of a message for notification of the completion of the user's browsing, the WEB browse reservation managing portion 111 deletes the piece of reservation data registered in the browse reservation list (Step S9).

On the other hand, in Step S5, the WEB browse reservation managing portion 111 operates (starts) the WEB browser 121. Next, in Step S6, a message for notifying that the time reserved for the browse by the user has passed is popped up by the display portion 122 of the WEB browse portion 12. Then, the routine of processing advances to the aforementioned Step S7.

As described above, according to this embodiment, when the user merely makes a reservation for a browse time of a WEB page, the user can be notified of the arrival of the browse time in the form of pop-up display at the browse time or at the time just earlier by a predetermined time than the browse time while the WEB page can be automatically opened by the display portion 122 of the WEB browse portion 12 at this point of time. Accordingly, there is an effect that the user can browse the WEB page promptly and surely.

Even in the case where the WEB browser 121 of the WEB browse portion 12 is inoperative, the WEB browser 121 is started automatically so that a message for notifying that the browse time has passed can be delivered to the user in the form of pop-up display while the WEB page can be automatically opened by the display portion 122 of the WEB browse portion 12 in accordance with the operation of the WEB browser 121. Accordingly, there is an effect that the user can browse the WEB page promptly and surely.

Further, even in the case where the user has moved to a place spatially far from the WEB page browse reservation managing system 1, the piece of electronic mail for notification of the arrival of the browse time for the WEB page can be delivered to the portable terminal 3. Accordingly, there is an effect that the user can browse the reserved WEB page surely.

Incidentally, the WEB page browse reservation managing system according to this embodiment canbe realized, for example, by an ordinary personal computer having a WEB page browse reservation managing program contained therein.

### [Second Embodiment]

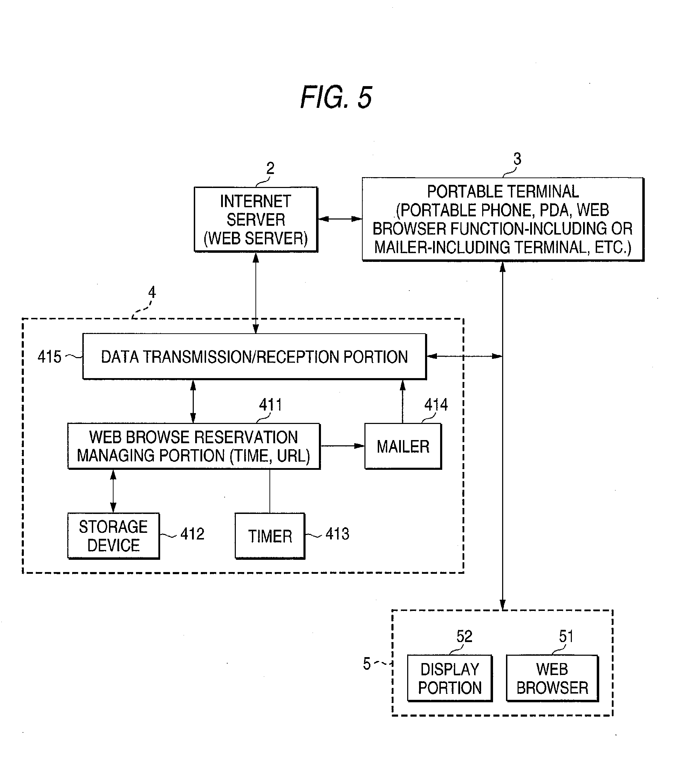

Fig. 5 is a configuration view showing a WEB page browse reservation managing system according to a second embodiment of the invention.

The WEB page browse reservation managing system according to the second embodiment of the invention is configured so that the WEB browse portion 12 defined in the first embodiment is not provided. The WEB browse is made, for example, on a WEB display terminal 5 or the like connected wirelessly.

Although the WEB page browse reservation managing system 4 also includes a data input portion for inputting data by the user, this data input portion is not shown.

The WEB page browse reservation managing system 4 includes a WEB browse reservation managing portion 411 for carrying out the process of making a reservation for a specific WEB page expressed by a URL and a browse time and the process of executing the reservation, a storage device 412 for storing data such as the URL of the reserved specific WEB page and the reserved browse time, a timer 413 for detecting arrival of the specified browse time, a mailer 414 for processing a piece of electronic mail sent to a portable terminal 3, and a data transmission/reception portion 415 for transmitting/receiving data to/from an Internet server 2, the portable terminal 3, and the WEB display terminal 5.

The WEB display terminal 5 has a WEB browser 51 provided with a WEB browser function for browsing the reserved WEB page, and a display portion 52 for displaying the reserved WEB page on a display screen.

Assume now that the data transmission/reception portion 415 and the Internet server 2 are connected to each other through the Internet, an LAN, or the like. Assume further that the data transmission/reception portion 415 is connected to the portable terminal 3 and to the WEB display terminal 5 directly or through the Internet server 2 by means of wireless communication.

Main constituent elements of the WEB page browse reservation managing system 4 according to this embodiment will be described below.

The WEB browse reservation managing portion 411 receives data input concerning a URL of a browses WEB page and a browse time from a user through the data input portion (not shown) and checks the browse WEB page. Then, the WEB browse reservation managing portion 411 registers the URL of the browse WEB page and the browse time in a browse reservation list in the storage device 412.

Further, the WEB browse reservation managing portion 411 sets the browse time or.the time just earlier by a predetermined time than the browse time in the timer 413. After this point of time, at a point of time when an interrupt occurs from the timer 413 and it is confirmed that the WEB browser 51 of the WEB display terminal 5 is operative, the WEB browse reservation managing portion 411 first operates the mailer 414 to transmit a piece of electronic mail for notification of the arrival of the browse time for the browses WEB page to the portable terminal 3 through the data transmission/reception portion 415 if a communication path to the portable terminal 3 has been already established.

On the other hand, if the communication path to the portable terminal 3 has not been established yet or if the communication path to the portable terminal 3 has been already established and the electronic mail transmission request is completed, the WEB browse reservation managing portion 411 starts download and display of the browse WEB page registered in accordance with the reservation. As a preparation for the download and display, first, the WEB browse reservation managing portion 411 checks the browse reservation list in the storage device 412, deduces the URL of the browse WEB page reserved for the browse and registered in association with the browse time from coincidence of the browse time with the point of time when an interrupt occurs from the timer 413, and makes the mailer 414 create a piece of electronic mail including the URL and transmit the piece of electronic mail to the WEB display terminal 5 through the data transmission/reception portion 415.

Then, a message for notification of the arrival of the time reserved for the browse by the user is popped up on a pop-up display screen by the display portion 52 of the WEB display terminal 5.

In addition, the WEB browser 51 of the WEB display terminal 5 downloads the browse WEB page expressed by the transmitted URL from the Internet server 2 through the data transmission/reception portion and the WEB browse reservation managing portion 411, and makes the display portion 52 display the downloaded browse WEB page on a display screen.

Then, upon reception of a message for notification of the completion of the user's browsing the browse WEB page from the WEB browser 51 of the WEB display terminal 5 through the data transmission/reception portion, the WEB browse reservation managing portion 411 deletes the piece of reservation data registered in the browse reservation list.

Even in the case where an interrupt occurs' form the timers 413, at a point of time when it is confirmed that the WEB browser 51 of the WEB display terminal 5 is inoperative, the WEB browse reservation managing portion 411 first operates the mailer 414 to transmit a piece of electronic mail for notifying that the browse time for the browse WEB page has passed to the portable terminal 3 through the data transmission/reception portion 415 if a communication path to the portable terminal 3 has been already established.

On the other hand, if the communication path to the portable terminal 3 has not been established yet or when the communication path to the portable terminal 3 has been already established and the electronic mail transmission request is completed, the WEB browse reservation managing portion 411 checks the browse reservation list in the storage device 412, deduces the URL of the browse WEB page reserved for the browse and registered in association with the browse time from coincidence of the browse time with the point of time when an interrupt occurs from the timer 413, and makes the mailer 414 create a piece of electronic mail including a browser operating command as a text and the URL and transmit the piece of electronic mail to the WEB display terminal 5 through the data transmission/reception portion 415.

Then, a message for notifying that the time reserved for the browse by the user has passed is popped up on a pop-up display screen by the display portion 52 of the WEB display terminal 5.

In addition, upon reception of the piece of electronic mail including the browser operating command as a text and the URL, the WEB displayterminal 5 operates (starts) the WEB browser 51 to download the browse WEB page expressed by the URL from the Internet server 2 through the data transmission/reception portion and the WEB browse reservation managing portion 411 and makes the display portion 52 display the downloaded browse WEB page on a display screen.

Then, upon reception of a message for notification of the completion of the user's browsing the browse WEB page, the WEB browse reservation managing portion 411 carries out the aforementioned process of deleting the piece of reservation data registered in the browse reservation list.

Next, respective constituent elements of the WEB display terminal 5 will be described.

The WEB browser 51 of the WEB display terminal 5 downloads the browse WEB page from the Internet server 2 through the data transmission/reception portion 415 and the WEB browse reservation managing portion 411 of the WEB page browse reservation managing system 4 in accordance with an instruction from the WEB browse reservation managing portion 411 by means of wireless communication, creates a display screen for displaying the browse WEB page on the basis of the downloaded information, and makes the display portion 52 display the browse WEB page on the display screen.

The display portion 52 of the WEB display terminal 5 displays the downloaded browse WEB page on a display screen by the control of the WEB browser 51 while the pop-up display screens are popped up.

An example of the pop-up display screen for notifying that it is just the reserved browse time in this embodiment is the same as the displayscreen shown in Fig. 2. In addition, an example of the display screen for displaying the reserved browse WEB page on the display screen in this embodiment is the same as the display screen shown in Fig. 3.

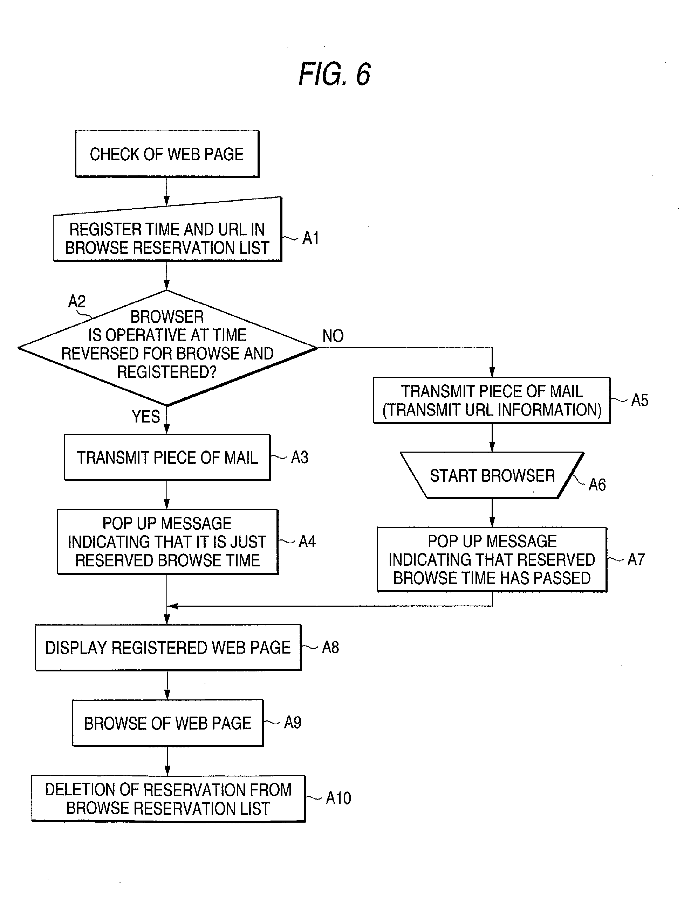

Fig. 6 is a flow chart showing an operation of the WEB browse reservation managing portion 411. The operation of the WEB browse reservation managing portion 411 will be described below according to the flow chart shown in Fig. 6 in connection with reference to Fig. 5.

First, in Step A1, after the WEB browse reservation managing portion 411 receives data input concerning a URL of a browse WEB page and a browse time from a user through the data input portion and checks the browse WEB page, the WEB browse reservation managing portion 411 registers the URL of the browse WEB page and the browse time in the browse reservation list in the storage device 412. Further, the WEB browse reservation managing portion 411 sets the browse time or the time just earlier by a predetermined time than the browse time in the timer 413.

Next, in Step A2, the WEB browse reservation managing portion 411 verifies whether the WEB browser 51 of the WEB display terminal 5 is operative or inoperative at a point of time when an interrupt occurs from the timer 413. If the WEB browser 51 of the WEB display terminal 5 is operative at the point of time when an interrupt occurs from the timer 413, the routine of processing advances to Step A3. On other than hand, if the WEB browser 51 of the WEB display terminal 5 is inoperative at the point of time when an interrupt occurs from the timer 413, the routine of processing shifts to Step A5.

Next, in Step A3, the WEB browse reservation managing portion 411 first operates the mailer 414 to transmit a piece of electronic mail for notification of the arrival of the browse time for the browse WEB page to the portable terminal 3 through the data transmission/reception portion 415 if a communication path to the portable terminal 3 has been already established.

On the other hand, if the communication path to the portable terminal 3 has not been established yet or if the communication path to the portable terminal 3 has been already established and the electronic mail transmission request is completed, the WEB browse reservation managing portion 411 checks the browse reservation list in the storage device 412, deduces the URL of the browse WEB page reserved for the browse and registered in association with the browse time from coincidence of the browse time with the point of time when an interrupt occurs from the timer 413, and makes the mailer 414 create a piece of electronic mail including the URL and transmit the piece of electronic mail including the URL to the WEB display terminal 5 through the data transmission/reception portion 415.

Next, in Step A4, amessage for notification of the arrival of the time reserved for the browse by the user is popped up on a pop-up display screen by the display portion 52 of the WEB display terminal 5.

Next, in Step A8, upon reception of the piece of electronic mail including the URL, the WEB browser 51 of the WEB display terminal 5 downloads the browse WEB page expressed by the URL from the Internet server 2 through the data transmission/reception portion and the WEB browse reservation managing portion 411, and makes the display portion 52 display the downloaded browse WEB page on a display screen.

When the user finishes browsing the WEB page (Step A9) , the WEB browse reservation managing portion 411 receives a message for notification of the completion of the user' s browsing the browse WEB page from the WEB browser 51 of the WEB display terminal 5 through the data transmission/reception portion. On reception of a message for notification of the completion of the user's browsing, the WEB browse reservation managing portion 411 deletes the piece of reservation data registered in the browse reservation list (Step A10).

On the other hand, in Step A5, the WEB browse reservation managing portion 411 first operates the mailer 414 to transmit a piece of electronic mail for notification of the arrival of the browse time for the browse WEB page to the portable terminal 3 through the data transmission/reception portion 415.

When WEB display needs to be made on the portable terminal 3 as will be described later, the URL information of the browse WEB page reserved for the browse will be transmitted together with the piece of electronic mail.

In Step A6, the WEB browse reservation managing portion 411 checks the browse reservation list in the storage device 412, deduces the URL of the browse WEB page reserved for the browse and registered in association with the browse time from coincidence of the browse time with the point of time when an interrupt occurs from the timer 413, and makes the mailer 414 create a piece of electronic mail including a browser operating command as a text and the URL and transmit the piece of electronic mail to the WEB display terminal 5 through the data transmission/reception portion 415. Upon reception of the piece of electronicmail including the browser operating command as a text and the URL, the WEB display terminal 5 operates (starts) the WEB browser 51.

Then, in Step A7, a message for notifying that the time reserved for the browse by the user has passed is popped up on a pop-up display screen by the display portion 5.2 of the WEB display terminal 5. Then, the routine of processing advances to Step A8.

Incidentally, when the portable terminal 3 is a WEB browser function-including terminal, the browse WEB page expressed by the URL can be also downloaded to the portable terminal 3 from the Internet server 2 by means of wireless communication and displayed on the portable terminal 3.

Although the embodiment has shown the case where electronic mail is used as communication means among the Internet server 2, the portable terminal 3 and the WEB display terminal 5, a unique communication protocol may be used instead.

As described above, according to this embodiment, when the user merely makes a reservation for a browse time of a WEB page, the user can be notified of the arrival of the browse time in the form of pop-up display at the browse time or at the time just earlier by a predetermined time than the browse time while the WEB page can be opened automatically on the display portion 52 of the WEB display terminal 5 at this pint of time. Accordingly, there is an effect that the user can browse the WEB page promptly and surely.

Even in the case where the WEB browser 51 of the WEB display terminal 5 is inoperative, the WEB browser 51 is operated automatically so that a massage for notifying that the browse time has passed can be delivered to the user in the form of pop-up display while the WEB page can be automatically opened on the display portion 52 in accordance with the operation of the WEB browser 51. Accordingly, there is an effect that the user can browse the WEB page promptly and surely.

Further, even in the case where the user has moved to a place spatially far from the WEB display terminal 5, a piece of electronic mail for notification of the arrival of the browse time for the WEB page can be sent to the portable terminal 3. Accordingly, there is an effect that the user can go to the place where the WEB display terminal 5 is installed, and can browse the reserved WEB page surely..

Moreover, when the portable terminal is a WEB browser function-including terminal, there is an effect that the user can use the portable terminal to browse the WEB page surely.

In addition, since the WEB page browse reservation managing system 4 used for inputting reservation data and the WEB display terminal 5 are set as individual devices separated spatially, there is an effect that portability occurs in the WEB display terminal 5 itself to make it easy to handle the WEB display terminal 5.

As described above, according to the invention, there is provided a WEB page browse reservation managing system including: a registration unit for registering a URL of a WEB page reserved for a browse by a user and a browse time in a browse reservation list; a timer unit for detecting the browse time or a time just earlier by a predetermined time than the browse time; and a notification information transmission unit for transmitting notification information about arrival of the browse time of the WEB page reserved for the browse at a point of time when an interrupt occurs from the timer unit. Accordingly, the user can browse the reserved WEB page surely.

Further, according to the invention, there is provided a WEB page browse reservation managing system further including: a notification display unit for displaying the notification information about arrival of the time reserved for the browse by the user on a WEB browse portion or a WEB display terminal. Thus, the user can be surely notified of the arrival of the browse time for the WEB page when the user views the WEB browse portion or the WEB display terminal.

Further, according to the invention, the WEB page reserved for the browse is displayed on the WEB browse portion or the WEB display terminal. Thus, the reserved WEB page can be opened automatically when the browse time of the reserved WEB page has arrived.

Further, according to the invention, the notification information about arrival of the time reserved for the browse by the user is sent to a portable terminal. Thus, the user can be surely notified of the arrival of the browse time for the reserved WEB page even in the case where the user has moved to a place spatially far from the WEB browse portion or the WEB display terminal.

Further, according to the invention, the WEB page reserved for the browse is displayed on the portable terminal. Thus, if the portable terminal is provided with a display portion for displaying the WEB page, the reserved WEB page can be displayed on the display portion of the portable terminal when the browse time of the reserved WEB page has arrived.

Further, according to the invention, the portable A terminal carried by the user is any one of a portable phone, a PDA, a WEB browser function-including terminal, and a mailer-including terminal. Thus, the notification information can be delivered to the user if the user carries any one of a portable phone, a PDA, a WEB browser function-including terminal and a mailer-including terminal with him or her. Accordingly, the user can browse the reserved WEB page surely on the basis of the notification information sent to the portable terminal.

Further, according to the invention, a WEB page browse reservation managing method for controlling a WEB page browse reservation managing system defined above can be realized.

Further, according to the invention, a WEB page browse reservation managing program for controlling a WEB page browse reservation managing system defined above can be realized.

## Claims

1. A WEB page browse reservation managing system comprising:
a registration unit for registering a URL of a WEB page reserved for a browse by a user and a browse time in a browse reservation list;
a timer unit for detecting the browse time or a time just earlier by a predetermined time than the browse time; and
a notification information transmission unit for transmitting notification information about arrival of the browse time at a point of time when an interrupt occurs from the timer unit.

2. The WEB page browse reservation managing system according to claim 1, further comprising a notification display unit for displaying the notification information about arrival of the browse time on either a WEB browse portion or a WEB display terminal.

3. The WEB page browse reservation managing system according to claim 2, wherein the WEB page reserved for the browse is displayed on either the WEB browse portion or the WEB display terminal.

4. The WEB page browse reservation managing system according to claim 1, further comprising a portable terminal;
wherein the notification information about arrival of the time reserved for the browse by the user is sent to the portable terminal.

5. The WEB page browse reservationmanaging system according to claim 4, wherein the page reserved for the browse is displayed on the portable terminal.

6. The WEB page browse reservation managing system according to claim 4, wherein the portable terminal is any one of a portable phone, a PDA, a WEB browser function-including terminal, and a mailer-including terminal.

7. A WEB page browse reservation managing method comprising:
registering a URL of a WEB page reserved for a browse by a user and a browse time in a browse reservation list;
detecting the browse time or a time just earlier by a predetermined time than the browse time by a timer unit; and
transmitting notification information about arrival of the browse time at a point of time when an interrupt occurs from the timer unit.

8. A WEB page browse reservation managing program comprising:
a registration unit for registering a URL of a WEB page reserved for a browse by a user and a browse time in a browse reservation list;
a timer unit for detecting the browse time or a time just earlier by a predetermined time than the browse time; and
a notification information transmission unit for transmitting notification information about arrival of the browse time of the WEB page reserved for the browse at a point of time when an interrupt occurs from the timer unit.
